# EUROPÄISCHE PATENTSCHRIFT

(11) **EP 1 217 038 B1**
(45) Veröffentlichungstag und Bekanntmachung des Hinweises auf die Patenterteilung: **28.12.2005**
(21) Anmeldenummer: 01125620.3
(22) Anmeldetag: 26.10.2001
(51) Int. Cl.: C08L 67/02

(54) **Polyesterformmasse**
Polyester moulding composition
Composition à mouler de polyester

(30) Priorität: 21.12.2000 DE 10064336
(43) Veröffentlichungstag der Anmeldung: 26.06.2002
(73) Patentinhaber: Degussa AG, 40474 Düsseldorf (DE)
(72) Erfinder: Häger, Harald, Dr., 45665 Recklinghausen (DE); Schmitz, Guido, Dr., 48249 Dülmen (DE); Schüler, Ralf, Dr., 45659 Recklinghausen (DE); Peirick, Heinz, 48653 Coesfeld (DE); Oenbrink, Georg, Dr., 48249 Dülmen (DE)

(56) Entgegenhaltungen:
- EP-A- 0 561 111
- WO-A-93/08234
- PATENT ABSTRACTS OF JAPAN vol. 016, no. 043 (C-0907), 4. Februar 1992 (1992-02-04) -& JP 03 250044 A (NIPPON G II PLAST KK), 7. November 1991 (1991-11-07)
- PATENT ABSTRACTS OF JAPAN vol. 011, no. 214 (C-434), 10. Juli 1987 (1987-07-10) -& JP 62 034951 A (TORAY IND INC), 14. Februar 1987 (1987-02-14)

## Beschreibung

Gegenstand der Erfindung ist die Verwendung eines tieftemperaturschlagzähen Werkstoffs, der neben Polyester als Matrixpolymer zusätzlich mindestens zwei Polymere enthält, die die Schlagzähigkeit des Werkstoffs verbessern und hierbei synergistisch zusammenwirken, zur Herstellung eines Konstruktionsteils im Bereich der Automobilindustrie. Die Erfindung hat darüber hinaus auch dieses Konstruktionsteil zum Gegenstand.

Konstruktionsteile, etwa im Bereich der Automobilindustrie, müssen heute sehr rigide Anforderungen hinsichtlich der Kälteschlagzähigkeit erfüllen. Hierzu werden Prüfungen nach unterschiedlichen Verfahren bei Prüftemperaturen von beispielsweise -40 °C durchgeführt.

Thermoplastische Polyester, die für Konstruktionsteile im Bereich der Automobilindustrie beispielsweise als Sperrschichtmaterial verwendet werden, um die Diffusion von Kraftstoffkomponenten durch die Wandung etwa von Kraftstoffleitungen zurückzudrängen, weisen allerdings eine gewisse Sprödigkeit auf, die den Entwickler zwingt, diese Sperrschichtwerkstoffe dahingehend zu modifizieren, dass diese die entsprechenden Anforderungen an die Tieftemperaturschlagzähigkeit erfüllen. Allerdings werden gerade durch die gängigen Tieftemperaturschlagzähmodifier wie EPM- oder EPDM-Kautschuke die Sperreigenschaften von Polyestern gegen Kraftstoffe negativ beeinflusst, so dass der Gehalt an Tieftemperaturschlagzähmodifiern nicht beliebig erhöht werden kann. Schlagzähmodifizierte Polyester sind beispielsweise aus der DE-OS 26 22 876 oder der DE-OS 44 01 165 bekannt.

Für den Entwickler besteht außerdem die zusätzliche Schwierigkeit, dass thermoplastische Polyester nur schlecht mit den üblichen Tieftemperaturschlagzähmodifiern wie EPM oder EPDM verträglich sind, auch wenn diese funktionalisiert sind und Säureanhydridgruppen enthalten, was üblicherweise durch radikalische Pfropfung des Kautschuks mit einem ethylenisch ungesättigten Anhydrid bewerkstelligt wird. Die schlechte Verträglichkeit drückt sich dadurch aus, dass der dispers verteilte Kautschuk an der Phasengrenzfläche nur schlecht an die Werkstoffmatrix anbindet. Um den gewünschten Effekt der Tieftemperaturschlagzähigkeit zu erzielen, müssen daher sehr hohe Konzentrationen eines Schlagzähmodifiers auf EPM- bzw. EPDM-Basis verwendet werden. Dadurch werden allerdings andere wichtige Eigenschaften wie etwa die Sperrwirkung oder die Lösemittel- oder Chemikalienbeständigkeit negativ beeinflusst.

In der JP-A-03250044 wird eine Formmasse beschrieben, die 100 Gew.-Teile eines aromatischen Polyesters, 3-150 Gew.-Teile eines gegebenenfalls hydrierten Styrol-Butadien-Blockcopolymeren und 3-120 Gew.-Teile eines Olefinpolymeren mit Epoxy- oder Oxazolinylgruppen enthält.

Aus der WO-A-9309234 geht eine Formmasse hervor, die Polybutylenterephthalat, ein Ethylenpolymer mit Epoxid- oder Oxazolinylgruppen sowie gegebenenfalls Acrylateinheiten sowie ferner gegebenenfalls ein Ethylen-Acrylat-Ionomer, ein hydriertes und mit Maleinsäureanhydrid gepfropftes Styrol/Dien-Blockcopolymer bzw. ein maleinsäureanhydridfunktionalisiertes Ethylen-α-Olefin-Copolymeres enthält. Die Formmasse wird zur Beschichtung von Kabeln verwendet.

Der Erfindung lag die Aufgabe zugrunde, Konstruktionsteile im Bereich der Automobilindustrie mit verbesserter Tieftemperaturschlagzähigkeit herzustellen und insbesondere tieftemperaturschlagzähe Polyesterformmassen bereitzustellen, die mit einem möglichst geringen Gehalt an Schlagzähmodifiern auskommen, um andere wichtige Eigenschaften so wenig wie möglich zu beeinflussen. Eine weitere Aufgabe bestand darin, derartige Konstruktionsteile bereitzustellen, die eine gute Tieftemperaturschlagzähigkeit aufweisen, ohne dass verglichen mit dem Matrixwerkstoff die Sperrwirkung gegenüber Kraftstoffkomponenten, die Lösemittelbeständigkeit oder die Chemikalienbeständigkeit unangemessen verschlechtert werden.

Diese Aufgaben wurden gelöst durch die Verwendung einer Formmasse, die folgende Komponenten enthält:
I. 60 bis 96,6 Gew.-Teile thermoplastischer Polyester,
II. 3 bis 39,5 Gew.-Teile einer Schlagzähkomponente, die Säureanhydridgruppen enthält, wobei die Schlagzähkomponente ausgewählt ist aus Ethylen/α-Olefin-Copolymeren und Styrol-Ethylen/Butylen-Blockcopolymeren,
III. 0,4 bis 20 Gew.-Teile eines Copolymeren, das Einheiten der folgenden Monomere enthält:
   a) 20 bis 94,5 Gew.-% eines oder mehrerer α-Olefine mit 2 bis 12 C-Atomen,
   b) 5 bis 79,5 Gew.-% einer oder mehrerer acrylischer Verbindungen, ausgewählt aus
      - Acrylsäure bzw. Methacrylsäure bzw. deren Salzen,
      - Estern von Acrylsäure bzw. Methacrylsäure mit einem C₁- bis C₁₂-Alkohol, die gegebenenfalls eine freie Hydroxyl- oder Epoxidfunktion tragen können,
      - Acrylnitril bzw. Methacrylnitril,
      - Acrylamiden bzw. Methacrylamiden,
   c) 0,5 bis 50 Gew.-% eines olefinisch ungesättigten Epoxids, Carbonsäureanhydrids, Carbonsäureimids, Oxazolins oder Oxazinons,
wobei die Summe der Gewichtsteile der Komponenten gemäß I., II. und III. 100 beträgt, zur Herstellung eines im Anspruch 1 definierten Konstruktionsteils im Bereich der Automobilindustrie.

In bevorzugten Ausführungsformen enthält die Formmasse hierbei:
I. 70 bis 94 Gew.-Teile und besonders bevorzugt 75 bis 92 Gew.-Teile Polyester,
II. 5 bis 28 Gew.-Teile, besonders bevorzugt 6 bis 23 Gew.-Teile und insbesondere bevorzugt 7 bis 22 Gew.-Teile der Schlagzähkomponente,
III. 0,6 bis 15 Gew.-Teile und besonders bevorzugt 0,7 bis 10 Gew.-Teile des Copolymeren, welches bevorzugt Einheiten der folgenden Monomere enthält:
   a) 30 bis 80 Gew.-% α-Olefin(e),
   b) 7 bis 70 Gew.-% und besonders bevorzugt 10 bis 60 Gew.-% der acrylischen Verbindung(en),
   c) 1 bis 40 Gew.-% und besonders bevorzugt 5 bis 30 Gew.-% des olefinisch ungesättigten Epoxids, Carbonsäureanhydrids, Carbonsäureimids, Oxazolins oder Oxazinons.

Als Polyester kommen linear aufgebaute, thermoplastische Polyester infrage. Diese werden durch Polykondensation von Diolen mit Dicarbonsäure bzw. deren polyesterbildenden Derivaten wie Dimethylestern hergestellt. Geeignete Diole haben die Formel HO-R-OH, wobei R einen divalenten, verzweigten oder unverzweigten aliphatischen und/oder cycloaliphatischen Rest mit 2 bis 40, vorzugsweise 2 bis 12, C-Atomen darstellt. Geeignete Dicarbonsäuren haben die Formel HOOC-R'-COOH, wobei R' einen divalenten aromatischen Rest mit 6 bis 20, vorzugsweise 6 bis 12, C-Atomen bedeutet.

Als Beispiel für Diole seien Ethylenglykol, Trimethylenglykol, Tetramethylenglykol, Hexamethylenglykol, Neopentylglykol, Cyclohexandimethanol sowie das C₃₆-Diol Dimerdiol genannt. Die Diole können alleine oder als Diolgemisch eingesetzt werden.

Als aromatische Dicarbonsäuren kommen z. B. Terephthalsäure, Isophthalsäure, 1.4-, 1.5-, 2.6- bzw. 2.7-Naphthalindicarbonsäure, Diphensäure und Diphenylether-4.4'-dicarbonsäure infrage. Bis zu 30 Mol-% dieser Dicarbonsäuren können durch aliphatische oder cycloaliphatische Dicarbonsäuren mit 3 bis 50 C-Atomen und bevorzugt mit 6 bis 40 C-Atomen wie z. B. Bernsteinsäure, Adipinsäure, Sebacinsäure, Dodecandisäure oder Cyclohexan-1.4-dicarbonsäure ersetzt sein.

Beispiele für geeignete Polyester sind Polyethylenterephthalat, Polypropylenterephthalat, Polybutylenterephthalat, Polyethylen-2.6-naphthalat, Polypropylen-2.6-naphthalat und Polybutylen-2.6-naphthalat.

Die Herstellung dieser Polyester gehört zum Stand der Technik (DE-OSS 24 07 155, 24 07 156; Ullmanns Encyclopädie der technischen Chemie, 4. Aufl., Bd. 19, Seiten 65 ff., Verlag Chemie, Weinheim, 1980).

Geeignete Ethylen/α-Olefin-Copolymere der Komponente gemäß II. sind vorzugsweise:
- Ethylen/C₃- bis ₁₂-α-Olefin-Copolymere mit 20 bis 96, bevorzugt 25 bis 85 Gew.-% Ethylen. Als C₃- bis C₁₂-α-Olefin wird beispielsweise Propen, 1-Buten, 1-Penten, 1-Hexen, 1-Octen, 1-Decen oder 1-Dodecen eingesetzt. Typische Beispiele hierfür sind EthylenPropylen-Kautschuk sowie LLDPE und VLDPE.
- Ethylen/C₃- bis ₁₂-α-Olefin/unkonjugiertes Dien-Terpolymere mit 20 bis 96, bevorzugt 25 bis 85 Gew.-% Ethylen und bis maximal etwa 10 Gew.-% eines unkonjugierten Diens wie Bicyclo(2.2.1)heptadien, Hexadien-1.4, Dicyclopentadien oder insbesondere 5-Ethylidennorbornen. Als C₃- bis C₁₂-α-Olefin sind ebenfalls beispielsweise Propen, 1-Buten, 1-Penten, 1-Hexen, 1-Octen, 1-Decen oder 1-Dodecen geeignet.

Die Herstellung dieser Copolymere bzw. Terpolymere mit Hilfe eines Ziegler-Natta-Katalysators ist Stand der Technik.

Als Styrol-Ethylen/Butylen-Blockcopolymere werden vorzugsweise Styrol-Ethylen/Butylen-Styrol-Blockcopolymere (SEBS) eingesetzt, die durch Hydrierung von Styrol-Butadien-Styrol-Blockcopolymeren erhältlich sind. Es können aber auch Diblocksysteme (SEB) oder Multiblocksysteme verwendet werden. Derartige Blockcopolymere sind Stand der Technik.

Die Komponente II. enthält Säureanhydridgruppen, die auf bekannte Weise durch thermische oder radikalische Reaktion mit einem ungesättigten Dicarbonsäureanhydrid, einer ungesättigten Dicarbonsäure oder einem ungesättigten Dicarbonsäuremonoalkylester eingebracht werden. Geeignete Reagentien sind beispielsweise Maleinsäure, Maleinsäureanhydrid, Maleinsäuremonobutylester, Fumarsäure, Aconitsäure oder Itaconsäureanhydrid. Auf diese Weise sind vorzugsweise 0,1 bis 4 Gew.-% eines ungesättigten Anhydrids an die Schlagzähkomponente II. aufgepfropft. Gemäß dem Stand der Technik kann das ungesättigte Dicarbonsäureanhydrid oder dessen Vorstufe auch zusammen mit einem weiteren ungesättigten Monomeren wie beispielsweise Styrol, α-Methylstyrol oder Inden aufgepfropft werden.

Das Copolymere der Komponente III. ist beispielsweise aus folgenden Monomeren zusammengesetzt, wobei diese Aufzählung nicht erschöpfend ist:
a) α-Olefine wie beispielsweise Ethylen, Propen, 1-Buten, 1-Penten, 1-Hexen, 1-Octen, 1-Decen oder 1-Dodecen;
b) Acrylsäure, Methacrylsäure oder deren Salze, beispielsweise mit Na^{⊕} oder Zn^{2⊕} als Gegenion; Methylacrylat, Ethylacrylat, n-Propylacrylat, n-Butylacrylat, Isobutylacrylat, n-Hexylacrylat, n-Octylacrylat, 2-Ethylhexylacrylat, Isononylacrylat, Dodecylacrylat, Methylmethacrylat, Ethylmethacrylat, n-Propylmethacrylat, n-Butylmethacrylat, Isobutylmethacrylat, 2-Ethylhexylmethacrylat, Hydroxyethylacrylat, 4-Hydroxybutylmethacrylat, Glycidylacrylat, Glycidylmethacrylat, Acrylnitril, Methacrylnitril, Acrylamid, N-Methylacrylamid, N,N-Dimethylacrylamid, N-Ethylacrylamid, N-Hydroxyethylacrylamid, N-Propylacrylamid, N-Butylacrylamid, N-(2-Ethylhexyl)acrylamid, Methacrylamid, N-Methylmethacrylamid, N,N-Dimethylmethacrylamid, N-Ethylmethacrylamid, N-Hydroxyethylmethacrylamid, N-Propylmethacrylamid, N-Butylmethacrylamid, N,N-Dibutylmethacrylamid, N-(2-Ethylhexyl)methacrylamid;
c) Vinyloxiran, Allyloxiran, Glycidylacrylat, Glycidylmethacrylat, Maleinsäureanhydrid, Aconitsäureanhydrid, Itaconsäureanhydrid, ferner die aus diesen Anhydriden durch Reaktion mit Wasser entstehenden Dicarbonsäuren; Maleinimid, N-Methylmaleinimid, N-Ethylmaleinimid, N-Butylmaleinimid, N-Phenylmaleinimid, Aconitsäureimid, N-Methylaconitsäureimid, N-Phenylaconitsäureimid, Itaconsäureimid, N-Methylitaconsäureimid, N-Phenylitaconsäureimid, N-Acryloylcaprolactam, N-Methacryloylcaprolactam, N-Acryloyllaurinlactam, N-Methacryloyllaurinlactam, Vinyloxazolin, Isopropenyloxazolin, Allyloxazolin, Vinyloxazinon oder Isopropenyloxazinon. Bei einer Verwendung von Glycidylacrylat oder Glycidylmethacrylat fungieren diese gleichzeitig auch als acrylische Verbindung b), so dass bei ausreichender Menge des Glycidyl(meth)acrylats keine weitere acrylische Verbindung enthalten zu sein braucht.

In dieser speziellen Ausführungsform hat das Copolymere die Zusammenstzung
a) 20 bis 94,5 Gew.-% eines oder mehrerer α-Olefine mit 2 bis 12 C-Atomen,
b) 0 bis 79,5 Gew.-% einer oder mehrerer acrylischer Verbindungen, ausgewählt aus
   - Acrylsäure bzw. Methacrylsäure bzw. deren Salzen,
   - Estern von Acrylsäure bzw. Methacrylsäure mit einem C₁- bis C₁₂-Alkohol,
   - Acrylnitril bzw. Methacrylnitril,
   - Acrylamiden bzw. Methacrylamiden,
c) 0,5 bis 80 Gew.-% eines Esters von Acrylsäure oder Methacrylsäure, der eine Epoxidgruppe enthält,
wobei die Summe von b) und c) mindestens 5,5 Gew.-% ergibt.

Darüber hinaus kann das Copolymere der Komponente III. in kleiner Menge weitere einpolymerisierte Monomere enthalten, sofern diese die Eigenschaften nicht nennenswert beeinträchtigen, wie beispielsweise Maleinsäuredimethylester, Fumarsäuredibutylester, Itaconsäurediethylester oder Styrol.

Die Herstellung derartiger Copolymerer ist Stand der Technik. Eine Vielzahl verschiedener Typen hiervon ist als Handelsprodukt erhältlich, beispielsweise unter der Bezeichnung LOTADER® (Elf Atochem; Ethylen/Acrylat/Terkomponente bzw. Ethylen/Glycidylmethacrylat).

In einer vorteilhaften Ausführungsform ist ein Teil des Polyesters der Komponente I. durch ein Polyamin-Polyamid-Copolymer ersetzt, und zwar im allgemeinen 0,1 bis 10 Gew.-Teile, bevorzugt 0,2 bis 5 Gew.-Teile und besonders bevorzugt 0,25 bis 3 Gew.-Teile. Entsprechende Formmassen sind ebenfalls Gegenstand dieser Erfindung. Das Polyamin-Polyamid-Copolymer wird unter Verwendung folgender Monomere hergestellt:
a) 0,5 bis 25 Gew.-%, bevorzugt 1 bis 20 Gew.-% und besonders bevorzugt 1,5 bis 16 Gew.-%, bezogen auf das Polyamin-Polyamid-Copolymer, eines Polyamins mit mindestens 4, bevorzugt mindestens 8 und besonders bevorzugt mindestens 11 Stickstoffatomen und einem zahlenmittleren Molekulargewicht Mₙ von mindestens 146 g/mol, bevorzugt von mindestens 500 g/mol und besonders bevorzugt von mindestens 800 g/mol sowie
b) polyamidbildende Monomere, ausgewählt aus Lactamen, ω-Aminocarbonsäuren und/oder äquimolaren Kombinationen von Diamin und Dicarbonsäuren

In einer bevorzugten Ausführungsform liegt die Aminogruppenkonzentration des Polyamin-Polyamid-Copolymers im Bereich von 100 bis 2 500 mmol/kg.

Als Polyamin können beispielsweise folgende Substanzklassen verwendet werden:
- Polyvinylamine (Römpp Chemie Lexikon, 9. Auflage, Band 6, Seite 4921, Georg Thieme Verlag Stuttgart 1992)
- Polyamine, die aus alternierenden Polyketonen hergestellt werden (DE-OS 196 54 058)
- Dendrimere wie beispielsweise
   ((H₂N-(CH₂)₃)₂N-(CH₂)₃)₂-N(CH₂)₂-N((CH₂)₂-N((CH₂)₃-NH₂)₂)₂
   (DE-A-196 54 179) oder
   Tris(2-aminoethyl)amin, N,N-Bis(2-aminoethyl)=N',N'-bis[2-[bis(2-aminoethyl)amino]-ethyl]-1,2-ethandiamin,
   3,15-Bis(2-aminoethyl)-6,12-bis[2-[bis(2-aminoethyl)amino]ethyl]-9-[2-[bis[2-bis(2-aminoethyl)amino]ethyl]amino]ethyl]3,6,9,12,15-pentaazaheptadecan-1,17-diamin (J. M. Warakomski, Chem. Mat. 1992, 4, 1000 - 1004);
- lineare Polyethylenimine, die durch Polymerisation von 4,5-Dihydro-1,3-oxazolen und anschließende Hydrolyse hergestellt werden können (Houben-Weyl, Methoden der Organischen Chemie, Band E20, Seiten 1482 - 1487, Georg Thieme Verlag Stuttgart, 1987);
- verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
   25 bis 46 % primäre Aminogruppen,
   30 bis 45 % sekundäre Aminogruppen und
   16 bis 40 % tertiäre Aminogruppen.

Das Polyamin besitzt im bevorzugten Fall ein zahlenmittleres Molekulargewicht Mₙ von maximal 20 000 g/mol, besonders bevorzugt von maximal 10 000 g/mol und insbesondere bevorzugt von maximal 5 000 g/mol.

Lactame bzw. ω-Aminocarbonsäuren, die als polyamidbildende Monomere eingesetzt werden, enthalten 4 bis 19 und insbesondere 6 bis 12 Kohlenstoffatome. Besonders bevorzugt werden ε-Caprolactam, ε-Aminocapronsäure, Capryllactam, ω-Aminocaprylsäure, Laurinlactam, ω-Aminododecansäure und/oder ω-Aminoundecansäure eingesetzt.

Kombinationen von Diamin und Dicarbonsäure sind beispielsweise Hexamethylendiamin/Adipinsäure, Hexamethylendiamin/Dodecandisäure, Octamethylendiamin/Sebacinsäure, Decamethylendiamin/Sebacinsäure, Decamethylendiamin/Dodecandisäure, Dodecamethylendiamin/Dodecandisäure und Dodecamethylendiamin/2.6-Naphthalindicarbonsäure Daneben können aber auch alle anderen Kombinationen eingesetzt werden wie Decamethylendiamin/Dodecandisäure/Terephthalsäure, Hexamethylendiamin/Adipinsäure/Terephthalsäure, Hexamethylendiamin/Adipinsäure/Caprölactam, Decamethylendiamin/Dodecandisäure/ω-Aminoundecansäure, Decamethylendiamin/Dodecandisäure/Laurinlactam, Decamethylendiamin/Terephthalsäure/Laurinlactam oder Dodecamethylendiamin/2,6-Naphthalindicarbonsäure/Laurinlactam.

In einer bevorzugten Ausführungsform wird das Polyamin-Polyamid-Copolymer zusätzlich unter Verwendung einer Oligocarbonsäure hergestellt, die ausgewählt ist aus 0,015 bis etwa 3 Mol-% Dicarbonsäure und 0,01 bis etwa 1,2 Mol-% Tricarbonsäure, jeweils bezogen auf die Summe der übrigen polyamidbildenden Monomere. Bei dieser Bezugnahme wird bei der äquivalenten Kombination von Diamin und Dicarbonsäure jedes dieser Monomere einzeln betrachtet. Wird eine Dicarbonsäure verwendet, setzt man bevorzugt 0,03 bis 2,2 Mol-%, besonders bevorzugt 0,05 bis 1,5 Mol-%, ganz besonders bevorzugt 0,1 bis 1 Mol-% und insbesondere 0,15 bis 0,65 Mol-% zu; verwendet man eine Tricarbonsäure, so nimmt man vorzugsweise 0,02 bis 0,9 Mol-%, besonders bevorzugt 0,025 bis 0,6 Mol-%, ganz besonders bevorzugt 0,03 bis 0,4 Mol-% und inbesondere 0,04 bis 0,25 Mol-%. Durch die Mitverwendung der Oligocarbonsäure wird die Lösemittel- und Kraftstoffbeständigkeit deutlich verbessert, insbesondere die Hydrolyse- und Alkoholysebeständigkeit.

Als Oligocarbonsäure kann jede beliebige Di- oder Tricarbonsäure mit 6 bis 24 C-Atomen eingesetzt werden, beispielsweise Adipinsäure, Korksäure, Azelainsäure, Sebacinsäure, Dodecandisäure, Isophthalsäure, 2.6-Naphthalindicarbonsäure, Cyclohexan-1.4-dicarbonsäure, Trimesinsäure und/oder Trimellitsäure.

Zusätzlich können, falls gewünscht, aliphatische, alicyclische, aromatische, aralkylische und/oder alkylarylsubstituierte Monocarbonsäuren mit 3 bis 50 Kohlenstoffatomen wie z.B. Laurylsäure, ungesättigte Fettsäuren, Acrylsäure oder Benzoesäure als Regler eingesetzt werden. Mit diesen Reglern kann die Konzentration an Aminogruppen verringert werden, ohne die Molekülgestalt zu verändern. Zusätzlich können auf diese Weise funktionelle Gruppen wie Doppel- bzw. Dreifachbindungen etc. eingeführt werden. Es ist aber erwünscht, dass das Polyamin-Polyamid-Copolymer einen substantiellen Anteil an Aminogruppen besitzt. Vorzugsweise liegt die Aminogruppenkonzentration dieses Copolymers im Bereich von 150 bis 1 500 mmol/kg, besonders bevorzugt im Bereich von 250 bis 1 300 mmol/kg und ganz besonders bevorzugt im Bereich von 300 bis 1 100 mmol/kg. Unter Aminogruppen werden hier und im folgenden nicht nur Aminoendgruppen, sondern auch gegebenenfalls vorhandene sekundäre bzw. tertiäre Aminfunktionen des Polyamins verstanden.

Die erfindungsgemäß verwendeten Polyamin-Polyamid-Copolymere können nach verschiedenen Verfahren hergestellt werden.

Eine Möglichkeit besteht darin, Lactam bzw. ω-Aminocarbonsäure und Polyamin zusammen vorzugeben und die Polymerisation bzw. die Polykondensation durchzuführen. Die Oligocarbonsäure kann entweder am Anfang oder im Verlauf der Reaktion zugegeben werden. Ein bevorzugtes Verfahren besteht jedoch darin, dass in einem zweistufigen Prozess zuerst die Lactamspaltung und Präpolymerisation in Gegenwart von Wasser durchgeführt wird (alternativ werden die entsprechenden ω-Aminocarbonsäuren bzw. Diamine und Dicarbonsäuren direkt eingesetzt und präpolymerisiert), im zweiten Schritt wird das Polyamin zugegeben, während die gegebenenfalls mitverwendete Oligocarbonsäure vor, während oder nach der Präpolymerisation zudosiert wird. Dann wird bei Temperaturen zwischen 200 und 290 °C entspannt und im Stickstoffstrom oder im Vakuum polykondensiert.

Ein weiteres bevorzugtes Verfahren besteht im hydrolytischen Abbau eines Polyamids zu einem Präpolymer und gleichzeitige oder anschließende Reaktion mit dem Polyamin. Vorzugsweise werden Polyamide verwendet, bei denen die Endgruppendifferenz näherungsweise Null beträgt, oder bei denen die gegebenenfalls mitverwendete Oligocarbonsäure bereits einpolykondensiert ist. Die Oligocarbonsäure kann aber auch zu Anfang oder im Laufe der Abbaureaktion zugegeben werden.

Mit diesen Verfahren lassen sich ultrahochverzweigte Polyamide mit Säurezahlen kleiner als 40 mmol/kg, bevorzugt kleiner als 20 mmol/kg und besonders bevorzugt kleiner als 10 mmol/kg herstellen. Schon nach ein- bis fünfstündiger Reaktionszeit bei Temperaturen von 200 °C bis 290 °C wird ein annähernd vollständiger Umsatz erzielt.

Falls gewünscht, kann in einem weiteren Verfahrensschritt eine mehrstündige Vakuumphase angeschlossen werden. Diese dauert mindestens vier Stunden, bevorzugt mindestens sechs Stunden und besonders bevorzugt mindestens acht Stunden bei 200 bis 290 °C. Nach einer Induktionsperiode von mehreren Stunden wird dann eine Erhöhung der Schmelzeviskosität beobachtet, was darauf zurückzuführen sein dürfte, dass eine Reaktion von Aminoendgruppen miteinander unter Ammoniakabspaltung und Kettenverknüpfung stattfindet. Hierdurch wird das Molekulargewicht weiter erhöht, was insbesondere für Extrusionsformmassen vorteilhaft ist.

Falls man die Reaktion nicht in der Schmelze zu Ende führen will, kann das Polyamin-Polyamid-Copolymere gemäß dem Stand der Technik auch in fester Phase nachkondensiert werden.
Durch den Zusatz dieses Copolymers wird die Schmelzeviskosität abgesenkt, so dass sich derartige Formmassen leichter verarbeiten lassen, ohne dass die Schlagzähigkeit verschlechtert wird.

Neben den Bestandteilen unter I. bis III. kann die Formmasse noch kleinere Mengen von Zusatzstoffen enthalten, die zum Einstellen bestimmter Eigenschaften benötigt werden. Beispiele hierfür sind Weichmacher, Pigmente bzw. Füllstoffe wie Ruß, Titandioxid, Glaskugeln, Hohlglaskugeln, Talkum, Zinksulfid, Silikate oder Carbonate, Nucleierungsmittel und Kristallisationsbeschleuniger, Verarbeitungshilfsmittel wie Wachse, Zinkstearat, Calciumstearat, langkettige Fettsäuren, Fettalkohole, Fettsäureester und Fettsäureamide oder Montansäureester, Flammschutzmittel wie Magnesiumhydroxid, Aluminiumhydroxid oder Melamincyanurat, Glasfasern, Antioxidantien, UV-Stabilisatoren, Hydrolysestabilisatoren sowie Zusätze, die dem Produkt antielektrostatische Eigenschaften oder eine elektrische Leitfähigkeit verleihen wie z. B. Kohlenstoffasern, Graphitfibrillen, Fasern aus rostfreiem Stahl bzw. Leitfähigkeitsruß.

Die erfindungsgemäß verwendete Formmasse sowie die Formmasse gemäß einem der Ansprüche 12 bis 15 dient zur Herstellung von Konstruktionsteilen im Bereich der Automobilindustrie. In der Regel handelt es sich hier um Rohre, Einfüllstutzen oder Behälter, insbesondere zur Leitung oder Bevorratung von Flüssigkeiten oder Gasen. Ein derartiges Rohr kann in gerader oder in gewellter Form ausgeführt sein oder es ist nur in Teilabschnitten gewellt. Wellrohre sind Stand der Technik (z.B. US 5 460 771), weshalb sich weitere Ausführungen hierzu erübrigen. Wichtige Einsatzzwecke sind die Verwendung als Kraftstoffleitung, als Tankeinfüllrohr, als Vapor Line (d.h. Leitung, in der Kraftstoffdämpfe geleitet werden, z.B. Entlüftungsleitungen), als Kühlflüssigkeitsleitung, als Klimaanlagenleitung oder als Kraftstoffbehälter. Darüber hinaus wird die Formmasse vorteilhaft für Quickconnectoren, Pumpengehäuse, Kraftstoffiltergehäuse, Aktivkohlekanister, Ventilgehäuse, Schwalltöpfe, Anbindungselemente an Kunststoffkraftstoffbehältern, Tankeinfüllstutzen, Gehäuse für Hydraulikzylinder, Scheibenwaschanlagenleitungen, Kupplungsleitungen, Unterdruckleitungen, Entlüftungsleitungen, Hydraulikleitungen oder Druckluftbremsleitungen verwendet.

Weiterhin dient die erfindungsgemäße Formmasse gemäß einem der Ansprüche 12 bis 15 zur Herstellung von Tankstellenleitungen, Wasserversorgungsleitungen oder Kabelbeschichtungen für Elektrokabel.

Alle diese Formteile können entweder vollständig aus der erfindungsgemäßen Formmasse bestehen, oder sie enthalten die erfindungsgemäße Formmasse als eine von mehreren Schichten, beispielsweise als festigkeitsvermittelnde Außenschicht, als Zwischenschicht oder als Innenschicht, etwa in einem Mehrschichtrohr oder Mehrschichtbehälter.

Die erfindungsgemäßen Formteile können nach allen üblichen Methoden des Standes der Technik hergestellt werden, beispielsweise durch Extrusion, Coextrusion, Blasformen oder Spritzguss.

### Beispiele

In den Versuchen wurden folgende Materialien verwendet:
- PES1:: VESTODUR® 2000, ein mittelviskoses Polybutylenterephthalat (J-Wert: 146 ml/g) der DEGUSSA-HÜLS AG,
- PES2:: Polybutylen-2.6-naphthalat mit einem J-Wert von 150 ml/g
- EXXELOR® VA 1803:: Ein maleinsäureanhydridgepfropfter Ethylen/Propylen-Kautschuk als Schlagzähkomponente (EXXON Chemicals)
- LOTADER® AX 8900:: Ein statistisches Terpolymer aus Ethylen, ca. 32 Gew.-% Acrylsäureestern und ca. 7 bis 9 Gew.-% Glycidylmethacrylat der Fa. ATOCHEM

### Vergleichsbeispiel A:

Auf einem Doppelschneckenkneter ZE 25 33 D der Firma Berstorff wurden 89 Gew.-Teile PES1 und 11 Gew.-Teile EXXELOR® VA 1803 bei 260 °C, 200 U/min und einem Durchsatz von 10 kg/h schmelzegemischt, stranggepresst und granuliert. Anschließend wurden aus dem Granulat Probekörper für die Schlagzähigkeitsprüfung hergestellt.

### Vergleichsbeispiel B:

Auf einem Doppelschneckenkneter ZE 25 33 D der Firma Berstorff wurden 89 Gew.-Teile PES 1 und 11 Gew.-Teile LOTADER® AX 8900 bei 260 °C, 200 U/min und einem Durchsatz von 10 kg/h schmelzegemischt, stranggepresst und granuliert. Anschließend wurden aus dem Granulat Probekörper für die Schlagzähigkeitsprüfung hergestellt.

### Beispiel 1:

Auf einem Doppelschneckenkneter ZE 25 33 D der Firma Berstorff wurden 89 Gew.-Teile PES1, 10 Gew.-Teile EXXELOR® VA 1803 und 1 Gew.-Teil LOTADER® AX 8900 bei 260 °C, 200 U/min und einem Durchsatz von 10 kg/h schmelzegemischt, stranggepresst und granuliert. Anschließend wurden aus dem Granulat Probekörper für die Schlagzähigkeitsprüfung hergestellt.

### Beispiel 2:

Wie Beispiel 1, jedoch wurde anstelle von PES1 PES2 verwendet.

Zur Messung der Kälteschlagzähigkeit gemäß SAE J844 (Schlaggewicht 445 g/Temperatur -40 °C) wurden Monorohre mit 8 mm Außendurchmesser und einer Wandstärke von 1 mm extrudiert.

**Tabelle 1:**

| Schlagzähigkeit bei -40 °C | | |
|---|---|---|
| Formmasse | Kerbschlagzähigkeit nach ISO 179/1eA [KJ/m²] | SAE J844 (Anzahl der Brüche bei 10 Rohren) |
| gemäß Vergleichsbeispiel A | 5,7 | 10 |
| gemäß Vergleichsbeispiel B | 4,1 | 10 |
| zum Vergleich: PES1 | 5,0 | 10 |
| zum Vergleich: PES2 | 3,6 | 10 |
| gemäß Beispiel 1 | 11,7 | 0 |
| gemäß Beispiel 2 | 9,2 | 0 |

## Patentansprüche

1. Verwendung einer Formmasse, die folgende Komponenten enthält:
I. 60 bis 96,6 Gew.-Teile thermoplastischer Polyester,
II. 3 bis 39,5 Gew.-Teile einer Schlagzähkomponente, die Säureanhydridgruppen enthält, wobei die Schlagzähkomponente ausgewählt ist aus Ethylen/α-Olefin-Copolymeren und Styrol-Ethylen/Butylen-Blockcopolymeren,
III. 0,4 bis 20 Gew.-Teile eines Copolymeren, das Einheiten der folgenden Monomere enthält:
a) 20 bis 94,5 Gew.-% eines oder mehrerer α-Olefine mit 2 bis 12 C-Atomen,
b) 5 bis 79,5 Gew.-% einer oder mehrerer acrylischer Verbindungen, ausgewählt aus
- Acrylsäure bzw. Methacrylsäure bzw. deren Salzen,
- Estern von Acrylsäure bzw. Methacrylsäure mit einem C₁- bis C₁₂-Alkohol,
- Acrylnitril bzw. Methacrylnitril,
- Acrylamiden bzw. Methacrylamiden,
c) 0,5 bis 50 Gew.-% eines olefinisch ungesättigten Epoxids, Carbonsäureanhydrids, Carbonsäureimids, Oxazolins oder Oxazinons,
wobei die Summe der Gewichtsteile der Komponenten gemäß I., II. und III. 100 beträgt, zur Herstellung eines Konstruktionsteils im Bereich der Automobilindustrie ausgewählt aus der Gruppe Rohre, Einfüllstutzen, Behälter, Quickconnectoren, Pumpengehäuse, Kraftstoffiltergehäuse, Ventilgehäuse, Anbindungselemente an Kunststoffkraftstoffbehältern und Gehäuse für Hydraulikzylinder.

2. Verwendung gemäß Anspruch 1,
**dadurch gekennzeichnet,**
**dass** das Copolymere der Komponente III folgende Zusammensetzung hat:
a) 20 bis 94,5 Gew.-% eines oder mehrerer α-Olefine mit 2 bis 12 C-Atomen,
b) 0 bis 79,5 Gew.-% einer oder mehrerer acrylischer Verbindungen, ausgewählt aus
- Acrylsäure bzw. Methacrylsäure bzw. deren Salzen,
- Estern von Acrylsäure bzw. Methacrylsäure mit einem C₁- bis C₁₂-Alkohol,
- Acrylnitril bzw. Methacrylnitril,
- Acrylamiden bzw. Methacrylamiden,
c) 0,5 bis 80 Gew.-% eines Esters von Acrylsäure oder Methacrylsäure, der eine Epoxidgruppe enthält,
wobei die Summe von b) und c) mindestens 5,5 Gew.-% ergibt.

3. Verwendung gemäß einem der vorhergehenden Ansprüche,
**dadurch gekennzeichnet,**
**dass** der thermoplastische Polyester ausgewählt ist aus der Gruppe Polyethylenterephthalat, Polypropylenterephthalat, Polybutylenterephthalat, Polyethylen-2.6-naphthalat, Polypropylen-2.6-naphthalat und Polybutylen-2.6-naphthalat.

4. Verwendung gemäß einem der vorhergehenden Ansprüche,
**dadurch gekennzeichnet,**
**dass** in der Komponente I. 0,1 bis 10 Gew.-Teile des Polyesters durch ein Polyamin-Polyamid-Copolymer ersetzt ist, das unter Verwendung folgender Monomere hergestellt wurde:
a) 0,5 bis 25 Gew.-%, bezogen auf das Polyamin-Polyamid-Copolymer, eines Polyamins mit mindestens 4 Stickstoffatomen und einem zahlenmittleren Molekulargewicht Mₙ von mindestens 146 g/mol sowie
b) polyamidbildende Monomere, ausgewählt aus Lactamen, ω-Aminocarbonsäuren und/oder äquimolaren Kombinationen von Diamin und Dicarbonsäure.

5. Verwendung gemäß einem der vorhergehenden Ansprüche,
**dadurch gekennzeichnet,**
**dass** die Formmasse antielektrostatisch bzw. elektrisch leitfähig eingestellt ist.

6. Formteil, hergestellt aus der Formmasse gemäß einem der vorhergehenden Ansprüche,
**dadurch gekennzeichnet,**
**dass** es ein Konstruktionsteil im Bereich der Automobilindustrie ist, ausgewählt aus der Gruppe Rohre, Einfüllstutzen, Behälter, Quickconnectoren, Pumpengehäuse, Kraftstoffiltergehäuse, Ventilgehäuse, Anbindungselemente an Kunststoffkraftstoffbehältern und Gehäuse für Hydraulikzylinder.

7. Formteil gemäß Anspruch 6,
**dadurch gekennzeichnet,**
**dass** es ein Rohr, ein Einfüllstutzen oder ein Behälter ist.

8. Formteil gemäß einem der Ansprüche 6 und 7,
**dadurch gekennzeichnet,**
**dass** es eine Kraftstoffleitung, ein Tankeinfüllrohr, eine Vapor Line, eine Tankstellenleitung, eine Kühlflüssigkeitsleitung, eine Klimaanlagenleitung, ein Kraftstoffbehälter, ein Aktivkohlekanister, ein Schwalltopf, ein Tankeinftillstutzen, eine Scheibenwaschanlagenleitung, eine Kupplungsleitung, eine Unterdruckleitung, eine Entlüftungsleitung, eine Hydraulikleitung oder eine Druckluftbremsleitung ist.

9. Formteil gemäß einem der Ansprüche 6 bis 8,
**dadurch gekennzeichnet,**
**dass** es die gemäß einem der Ansprüche 1 bis 5 verwendete Formmasse als eine von mehreren Schichten enthält.

10. Formteil gemäß Anspruch 9,
**dadurch gekennzeichnet,**
**dass** es ein Mehrschichtrohr ist.

11. Formteil gemäß einem der Ansprüche 6 bis 10, hergestellt durch Extrusion, Coextrusion, Blasformen oder Spritzguss.

## Claims

1. Use of a moulding composition which contains the following components:
I. from 60 to 96.6 parts by weight of thermoplastic polyester,
II. from 3 to 39.5 parts by weight of an impact-modifying component which contains anhydride groups, where the impact-modifying component has been selected from the group consisting of ethylene/α-olefin copolymers and styrene-ethylene/butylene block copolymers,
III. from 0.4 to 20 parts by weight of a copolymer which contains units of the following monomers:
a) from 20 to 94.5% by weight of one or more α-olefins having from 2 to 12 carbon atoms,
b) from 5 to 79.5% by weight of one or more acrylic compounds, selected from the group consisting of
- acrylic acid and methacrylic acid and salts thereof,
- esters of acrylic acid and/or of methacrylic acid with a C₁-C₁₂ alcohol,
- acrylonitrile and methacrylonitrile,
- acrylamides and methacrylamides, and
c) from 0.5 to 50% by weight of an olefinically unsaturated epoxide, carboxylic anhydride, carboximide, oxazoline or oxazinone,
where the total of the parts by weight of components I, II and III is 100, for producing an engineering component in the automotive industry sector, selected from the group consisting of tubes,filler necks,containers, quick connectors, pump housings, fuel-filter housings, valve housings, connectors to plastic fuel tanks and housings for hydraulic cylinders.

2. Use according to claim 1,
**characterized in that**
the copolymer of component III has the following makeup:
a) from 20 to 94.5% by weight of one or more α-olefins having from 2 to 12 carbon atoms,
b) from 0 to 79.5% by weight of one or more acrylic compounds, selected from the group consisting of
- acrylic acid and methacrylic acid and salts thereof,
- esters of acrylic acid and/or of methacrylic acid with a C₁-C₁₂ alcohol,
- acrylonitrile and methacrylonitrile,
- acrylamides and rftethacrylamides, and
c) from 0.5 to 80% by weight of an ester of acrylic acid or methacrylic acid, where the ester contains an epoxy group,
where the total of b) and c) is at least 5.5% by weight.

3. Use according to any of the preceding claims,
**characterized in that**
the thermoplastic polyester has been selected from the group consisting of polyethylene terephthalate, polypropylene terephthalate, polybutylene terephthalate, polyethylene 2,6-naphthalate, polypropylene 2,6-naphthalate and polybutylene 2,6-naphthalate.

4. Use according to any of the preceding claims,
**characterized in that**,
in component I, from 0.1 to 10 parts by weight of the polyester have been replaced by a polyamine-polyamide copolymer which has been prepared using the following monomers:
a) from 0.5 to 25% by weight, based on the polyamine-polyamide copolymer, of a polyamine having at least 4 nitrogen atoms and a number-average molar mass Mₙ of at least 146 g/mol, and
b) polyamide-forming monomers selected from the group consisting of lactams, ω-aminocarboxylic acids and/or equimolar combinations of diamine and dicarboxylic acid.

5. Use according to any of the preceding claims,
**characterized in that**
the moulding composition has been rendered antistatic and/or electrically conductive.

6. A moulding produced from the moulding composition according to any of the preceding claims,
**characterized in that**
it is an engineering component in the automotive industry sector, selected from the group consisting of tubes, filler necks, containers, quick connectors, pump housings, fuel-filter housings, valve housings, connectors to plastic fuel tanks and housings for hydraulic cylinders.

7. A moulding according to claim 6,
**characterized in that**
it is a tube, a filler neck or a container.

8. A moulding according to either of claims 6 and 7,
**characterized in that**
it is a fuel line, a tank-filling pipe, a vapour line, a fuel-pump line, a coolant-liquid line, an air-conditioning-system line, a fuel container, an activated-carbon canister, an anti-surge cup, a tank filler neck, a windscreen wash system line, a clutch line, a reduced-pressure line, a ventilation line, a hydraulic line or an air-brake line.

9. A moulding according to anyone of claims 6 to 8,
**characterized in that**
it contains the moulding composition used according to any of claims 1 to 5, as one of two or more layers.

10. A moulding according to claim 9,
**characterized in that**
it is a tube having two or more layers.

11. A moulding according to anyone of claims 6 to 10, produced by extrusion, coextrusion, blow moulding or injection moulding.

## Revendications

1. Utilisation d'une masse à mouler qui contient les composants suivants :
I. 60 à 96,6 parties en poids de polyester thermoplastique,
II. 3 à 39,5 parties en poids d'un composant résilient qui contient des groupes anhydride d'acide, le composant résilient étant choisi parmi les copolymères d'éthylène et d'α-oléfine, et les copolymères séquencés styrène-éthylène/butylène,
III. 0,4 à 20 parties en poids d'un copolymère qui contient des unités des monomères suivants :
a) 20 à 94,5 % en poids d'une ou de plusieurs a-oléfines comportant de 2 à 12 atomes de carbone,
b) 5 à 79,5 % en poids d'un ou de plusieurs composés acryliques, choisis parmi
- l'acide acrylique ou méthacrylique, ou leurs sels,
- les esters de l'acide acrylique ou méthacrylique avec un alcool en C₁ à C₁₂,
- l'acrylonitrile, ou le émthacrylonitrile,
- les acrylamides, ou les méthacrylamides,
c) 0,5 à 50 % en poids d'un époxyde oléfiniquement insaturé, d'un anhydride d'acide carboxylique, d'un imide d'acide carboxylique, d'une oxazoline ou d'une oxazinone,
la somme des parties en poids des composants selon I, II et III s'élevant à 100,
pour la fabrication d'une pièce de construction dans le domaine de l'industrie automobile, choisie dans le groupe constitué par les tubes, les goulottes de remplissage, les réservoirs, les connecteurs rapides, les corps de pompe, les corps de filtres à carburant, les boîtes à clapets, les éléments de raccordement sur les réservoirs de carburants synthétiques et les boîtiers de vérins hydrauliques.

2. Utilisation selon la revendication 1,
**caractérisée en ce que**
le copolymère du composant III a la composition suivante :
a) 20 à 94,5 % en poids d'une ou de plusieurs α-oléfines comportant de 2 à 12 atomes de carbone,
b) 0 à 79,5 % en poids d'un ou de plusieurs composés acryliques choisis parmi
- l'acide acrylique ou méthacrylique ou leurs sels,
- les esters de l'acide acrylique ou le méthacrylique avec un alcool en C₁ à C₁₂,
- l'acrylonitrile, ou le méthacrylonitrile,
- les acrylamides, ou les méthacrylamides,
c) 0,5 à 80 % en poids d'un ester de l'acide acrylique ou de l'acide méthacrylique qui contient un groupe époxyde,
la somme de b) et de c) s'élevant à au moins 5,5 % en poids.

3. Utilisation selon l'une des revendications précédentes,
**caractérisée en ce que**
le polyester thermoplastique est choisi dans le groupe constitué par le téréphtalate de polyéthylène, le téréphtalate de polypropylène, le téréphtalate de polybutylène, le 2,6-naphtalate de polyéthylène, le 2,6-naphtalate de polypropylène et de 2,6-naphtalate de polybutylène.

4. Utilisation selon l'une des revendications précédentes,
**caractérisée en ce que**
dans le composant I de 0,1 à 10 parties en poids du polyester sont remplacées par un copolymère de polyamine et de polyamide, qui a été préparé en utilisant les monomères suivants :
a) 0,5 à 25 % en poids, par rapport au copolymère de polyamine et de polyamide, d'une polyamine présentant au moins 4 atomes d'azote et un poids moléculaire moyen en nombre Mₙ d'au moins 146 g/mole, ainsi que
b) des monomères formant des polyamides, choisis parmi les lactames, les acides ω-aminocarboxyliques et/ ou des combinaisons équimolaires de diamine et d'acide carboxylique.

5. Utilisation selon l'une des revendications précédentes,
**caractérisée en ce que**
la masse à mouler est construite de manière à être anti-électrostatique, ou conductrice de l'électricité.

6. Article moulé fabriqué à partir de la masse à mouler selon l'une des revendications précédentes,
**caractérisé en ce qu'**
il s'agit d'une pièce de construction du domaine de l'industrie automobile, choisie dans le groupe constitué par les tubes, les goulottes de remplissage, les réservoirs, les connecteurs rapides, les corps de pompe, les corps de filtres à carburant, les boîtes à clapet, les éléments de raccordement sur les réservoirs de carburants synthétiques et les boîtiers de vérins.

7. Article moulé selon la revendication 6,
**caractérisé en ce qu'**
il s'agit d'un tube, d'une goulotte de remplissage ou d'un réservoir.

8. Article moulé selon l'une des revendications 6 et 7,
**caractérisé en ce qu'**
il s'agit d'une conduite de carburant, d'un tube de remplissage de réservoir, d'une conduite de vapeur, d'une canalisation de station-service, d'une conduite de liquide de refroidissement, d'une conduite d'installation de climatisation, d'un réservoir de carburant, d'un réservoir à charbon actif, d'un pot de remous, d'un support de remplissage de réservoir, d'une conduite d'installation de lavage des vitres, d'une conduite de couplage, d'une conduite de dépression, d'une conduite d'évacuation d'air, d'une conduite hydraulique ou d'une conduite de frein pneumatique.

9. Article moulé selon l'une des revendications 6 à 8,
**caractérisé en ce qu'**
il contient la masse à mouler utilisée selon l'une des revendications 1 à 5 comme une couche parmi plusieurs.

10. Article moulé selon la revendication 9,
**caractérisé en ce qu'**
il s'agit d'un tube multi-couches.

11. Article moulé selon l'une des revendications 6 à 10, fabriqué par extrusion, coextrusion, soufflage sur matrice ou moulage par injection.
